(19) Europäisches Patentamt / European Patent Office / Office européen des brevets

(11) **EP 4 765 246 A1**

(12) **EUROPEAN PATENT APPLICATION**
published in accordance with Art. 153(4) EPC

(43) Date of publication:
**24.06.2026 Bulletin 2026/26**

(21) Application number: 24854205.2

(22) Date of filing: **13.08.2024**

(51) International Patent Classification (IPC):
*H01M 4/525* (2010.01)    *C01G 53/00* (2025.01)
*H01M 4/36* (2006.01)    *H01M 10/052* (2010.01)
*H01M 10/0562* (2010.01)    *H01M 10/0565* (2010.01)

(52) Cooperative Patent Classification (CPC):
C01G 53/00; H01M 4/36; H01M 4/525;
H01M 10/052; H01M 10/0562; H01M 10/0565;
Y02E 60/10

(86) International application number:
**PCT/JP2024/028896**

(87) International publication number:
**WO 2025/037616 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.08.2023 JP 2023132647**

(71) Applicant: **SUMITOMO METAL MINING CO., LTD.**
**Tokyo**
**105-8716 (JP)**

(72) Inventor: **ISHADO, Yuji**
**Niihama-shi, Ehime 792-0002 (JP)**

(74) Representative: **Müller-Boré & Partner**
**Patentanwälte PartG mbB**
**Friedenheimer Brücke 21**
**80639 München (DE)**

(54) **POSITIVE-ELECTRODE ACTIVE MATERIAL FOR ALL-SOLID-STATE LITHIUM ION SECONDARY BATTERIES, AND ALL-SOLID-STATE LITHIUM ION SECONDARY BATTERY**

(57)    An object is to provide a positive electrode active material having a high discharge capacity in an all-solid-state lithium ion secondary battery.

The positive electrode active material for an all-solid-state lithium ion secondary battery includes a lithium-transition metal composite oxide including a secondary particle including a plurality of primary particles being aggregated and includes a coating layer coating a surface of the secondary particle, the lithium-transition metal composite oxide contains lithium and nickel and optionally contains cobalt and an element M being an additive element other than lithium, nickel, cobalt, and oxygen, the coating layer contains a compound containing at least lithium and tungsten, the surface of the secondary particle is coated with tungsten at a percentage of coverage of 30% or more and 95% or less, and the percentage of coverage is represented by P (%) and calculated using XPS analysis with (Formula 1) described below.

$$P = (W/(W + Ni + Co + M)) \times 100 \ (\%) \quad \cdots \ (\text{Formula 1})$$

Fig. 1

**Description**

Technical Field

The present invention relates to a positive electrode active material for an all-solid-state lithium ion secondary battery, and an all-solid-state lithium ion secondary battery.

Background Art

In recent years, it is strongly desired to develop small-sized and lightweight secondary batteries having a high energy density in association with the widespread use of electric cars. Such secondary batteries include lithium ion secondary batteries. A lithium ion secondary battery includes a positive electrode, a negative electrode, and an electrolyte. As the active materials in the negative electrode and the positive electrode, materials capable of releasing and absorbing lithium are used.

Currently, in a general lithium ion secondary battery, a lithium-transition metal composite oxide such as $LiCoO_2$, $LiNiO_2$, or $LiMn_2O_4$ is used as a positive electrode active material, lithium metal, a lithium alloy, a metal oxide, carbon, or the like is used as a negative electrode active material, and as an electrolyte, an electrolyte solution is used that is obtained by dissolving a Li salt such as $LiClO_4$ or $LiPF_6$ as a supporting salt in an organic solvent such as ethylene carbonate, dimethyl carbonate, or ethyl methyl carbonate.

Among the components of the lithium ion secondary battery, the electrolyte solution particularly serves as a factor that limits the battery performance such as highspeed charging, safety, and life, because of chemical characteristics such as the heat resistance and the potential window. Therefore, currently, research and development are actively performed on an all-solid-state lithium ion secondary battery (hereinafter, also simply referred to as "all-solid-state battery") in which a solid electrolyte is used instead of an electrolyte solution to improve the battery performance.

In the research and development, for example, Patent Literature 1 proposes that among solid electrolytes, a sulfide solid electrolyte has high lithium ion conductivity and is suitable for use in an all-solid-state battery. However, as disclosed in Non Patent Literature 1, when the sulfide solid electrolyte and a positive electrode active material, which is an oxide, come into contact with each other, a reaction occurs at a contact interface between the solid electrolyte and the positive electrode active material during charge and discharge, and a high resistance layer is generated at the interface to inhibit operation of the battery.

For example, Patent Literature 2 proposes providing a coating layer of a lithium ion conductive oxide on the surface of a positive electrode active material in order to suppress generation of the high resistance layer.

Citation List

Patent Literature

Patent Literature 1: JP 2014-056661 A
Patent Literature 2: WO 2007/004590 A

Non Patent Literature

Non Patent Literature 1: Narumi Ohta et al., "LiNbO3-coated LiCoO2 as cathode material for all solid-state lithium secondary batteries", Electrochemistry Communications 9 (2007) 1486-1490

Summary of Invention

Technical Problem

For example, Examples of Patent Literature 2 disclose that generation of a high resistance layer can be suppressed and the discharge capacity of an all-solid-state battery can be increased by providing a coating layer of $LiNbO_3$, which is selected from lithium ion conductive oxides, on the surface of a positive electrode active material. However, the charge and discharge capacity is still lower than that of a lithium ion secondary battery in which an electrolyte solution is used as an electrolyte, so that a further increase in charge and discharge capacity is desired.

In view of the above problem, an object of the present invention is to provide a positive electrode active material having a higher discharge capacity as a positive electrode active material, for an all-solid-state lithium ion secondary battery, including a coating layer.

Solution to Problem

In order to solve the above problem, the present inventors have intensively studied a positive electrode active material, for an all-solid-state battery, including a coating layer that suppresses an interfacial reaction between a solid electrolyte and the positive electrode active material. As a result, it has been found that the charge and discharge capacity of an all-solid-state battery is increased by coating the surface of a secondary particle of the positive electrode active material at a specific ratio with a compound containing at least lithium and tungsten.

A first aspect of the present invention provides a positive electrode active material, for an all-solid-state lithium ion secondary battery, including: a lithium-transition metal composite oxide including a secondary particle including a plurality of primary particles being aggregated; and a coating layer coating a surface of the secondary particle, and the lithium-transition metal composite oxide contains lithium and nickel, and optionally contains cobalt and an element M being an additive element other than lithium, nickel, cobalt, and oxygen, the coating layer contains a compound containing at least lithium and tungsten, the surface of the secondary particle is coated with tungsten at a percentage of coverage of 30% or more and 95% or less, and the percentage of coverage is represented by P (%) and calculated with (Formula 1) described below.

$$P = (W/(W + Ni + Co + M)) \times 100\ (\%) \quad \cdots \text{(Formula 1)}$$

W: Amount of tungsten quantified by X-ray photoelectron spectroscopy (XPS analysis)
Ni: Amount of nickel quantified by X-ray photoelectron spectroscopy (XPS analysis)
Co: Amount of cobalt quantified by X-ray photoelectron spectroscopy (XPS analysis)
M: Amount of element M quantified by X-ray photoelectron spectroscopy (XPS analysis) excluding tungsten

The lithium-transition metal composite oxide is preferably represented by (Formula 2) described below.

$$Li_aNi_{1-x-y}Co_xM_yO_{2+z} \cdots \qquad \text{(Formula 2)}$$

M represents one or more elements selected from the group consisting of Mg, Ca, Sr, Ba, Al, Ti, V, Cr, Mn, Fe, Cu, Zr, Nb, Mo, W, Ta, Si, P, and B, and $0.9 \leq a \leq 1.2$, $0.01 \leq x \leq 0.5$, $0.01 \leq y \leq 0.5$, $0.02 \leq x + y < 1.0$, and $-0.1 \leq z \leq 0.1$ are satisfied.

The lithium-transition metal composite oxide preferably includes a compound containing tungsten present between the plurality of primary particles in the secondary particle. The percentage of coverage P is preferably 60% or more and 95% or less. The percentage of coverage P is preferably 80% or more and 95% or less. The lithium-transition metal composite oxide preferably has a volume average particle size Mv of 1 $\mu$m or more and 10 $\mu$m or less. The positive electrode active material preferably contains tungsten at a content of 0.1 mass% or more and 6 mass% or less with respect to a total amount of the positive electrode active material. The positive electrode active material preferably has a pore volume of 0.001 cm$^3$/g or more and 0.008 cm$^3$/g or less and an average pore size of 1 nm or more and 10 nm or less.

A second aspect of the present invention provides an all-solid-state lithium ion secondary battery including: a positive electrode containing the positive electrode active material for an all-solid-state lithium ion secondary battery; a negative electrode; and a solid electrolyte.

Advantageous Effects of Invention

According to the present invention, it is possible to provide a positive electrode active material having a higher discharge capacity as a positive electrode active material, for an all-solid-state lithium ion secondary battery, including a coating layer.

Brief Description of Drawings

Fig. 1 is a schematic view illustrating an example of a positive electrode active material according to the present embodiment.

Fig. 2 is an explanatory view of a sectional configuration of an evaluation battery used for battery evaluation.

Description of Embodiments

Hereinafter, an embodiment of the present invention will be described with reference to the drawings. Note that in the drawings, in order to make it easy to understand each configuration, some parts are emphasized or simplified, and actual structures, shapes, scales, and the like may be different from those of the drawings. The present invention is not limited to the following embodiments, and various modifications and substitutions can be made to the following embodiments without departing from the scope of the present invention.

1. Positive electrode active material for all-solid-state lithium ion secondary battery

A configuration example of a positive electrode active material for an all-solid-state lithium ion secondary battery (hereinafter, also simply referred to as "positive electrode active material") according to the present embodiment will be described.

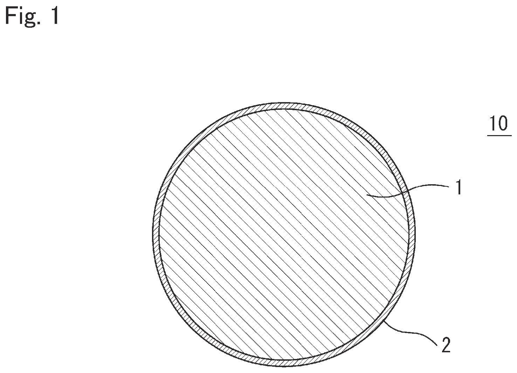

Fig. 1 is a view schematically illustrating an example of a positive electrode active material according to the present embodiment. As illustrated in Fig. 1, a positive electrode active material 10 includes a lithium-transition metal composite oxide 1 and a coating layer 2 coating a surface of the lithium-transition metal composite oxide 1. Hereinafter, each component will be described.

(1) Lithium-transition metal composite oxide

The lithium-transition metal composite oxide 1 includes a secondary particle including a plurality of primary particles being aggregated. The lithium-transition metal composite oxide 1 contains lithium, a transition metal, and oxygen, and may have a crystal structure of a layered rock salt structure.

(Composition)

The lithium-transition metal composite oxide 1 is a compound containing lithium, a transition metal, and oxygen, and preferably contains nickel as the transition metal, and more preferably contains nickel and cobalt. The lithium-transition metal composite oxide 1 preferably has, for example, a composition represented by the following general formula (1).

General formula (1):          $Li_aNi_{1-x-y}Co_xM_yO_{2+z}$

In the general formula (1), M represents one or more elements selected from the group consisting of Mg, Ca, Sr, Ba, Al, Ti, V, Cr, Mn, Fe, Cu, Zr, Nb, Mo, W, Ta, Si, P, and B, and

$$0.9 \leq a \leq 1.2,$$

$$0.01 \leq x \leq 0.5,$$

$$0.01 \leq y \leq 0.5,$$

$$0.02 \leq x + y < 1,$$

and

$$-0.1 \leq z \leq 0.1$$

are satisfied.

In the general formula (1), the value of a representing the content of lithium is 0.9 or more and 1.2 or less, may be 0.95 or more and 1.2 or less, and is more preferably 1.0 or more and 1.1 or less. When the value of a is in the above range, an output characteristic and a capacity characteristic of a secondary battery using the positive electrode active material 10 can be improved. Specifically, if the value of a is 0.9 or more, the internal resistance of the secondary battery using the positive electrode active material 10 can be suppressed, and the output characteristic can be improved. If the value of a is set to 1.2 or less, the initial discharge capacity of the secondary battery using the positive electrode active material 10 can be kept high.

In the general formula (1), (1 - x - y) representing the content of nickel is more than 0 and 0.98 or less, and may be 0.3 or more and 0.98 or less, or 0.5 or more and 0.98 or less. The lower limit of the nickel content may be 0.6 or more, 0.7 or more, or 0.8 or more. The higher the content ratio of (1 - x - y) is, the lower the voltage required for charging is, and as a result, the higher the battery capacity is.

In the general formula (1), x representing the content of cobalt is 0.01 or more and 0.5 or less, and may be 0.01 or more and 0.3 or less, or 0.05 or more and 0.2 or less. In the above range of the cobalt content, a charge and discharge cycle characteristic and an output characteristic can be improved.

In the general formula (1), the element M is one or more elements selected from the group consisting of Mg, Ca, Sr, Ba, Al, Ti, V, Cr, Mn, Fe, Cu, Zr, Nb, Mo, W, Ta, Si, P, and B. The element M preferably contains at least one element selected from the group consisting of Al and Mn, and preferably contains Al. The element M can be appropriately selected according to an intended use and required performance of a secondary battery including the positive electrode active material 10.

In the above amount ratio, y representing the content ratio of the element M satisfies $0 < y \leq 0.5$, preferably satisfies $0 < y \leq 0.3$, and may satisfy $0 < y \leq 0.2$. For example, when the element M contains Al, the range (y1) of Al may be, for example, $0 < y1 \leq 0.1$ or $0 < y1 \leq 0.05$.

(Crystal structure)

The lithium-transition metal composite oxide 1 preferably has a crystal structure of a layered rock salt structure. When the lithium-transition metal composite oxide 1 has a crystal structure of a layered rock salt structure, a secondary battery can have a high battery capacity. The crystal structure of the lithium-transition metal composite oxide 1 can be confirmed by powder X-ray diffraction (XRD) measurement. Specifically, a peak attributed to a layered rock salt crystal structure of an "R-3m" structure (crystal structure belonging to a space group R-3m) is preferably detected from a diffraction pattern obtained when the lithium-transition metal composite oxide 1 is subjected to powder X-ray diffraction (XRD) measurement. In particular, it is more preferable that only a peak attributed to a layered rock salt crystal structure of an "R-3m" structure be detected from the above diffraction pattern.

(Particle structure)

The lithium-transition metal composite oxide 1 includes a secondary particle including a plurality of primary particles being aggregated. The structure of the secondary particle of the lithium-transition metal composite oxide 1 is not particularly limited, but is preferably a solid structure in which primary particles are densely disposed. For example, the lithium-transition metal composite oxide 1 may have a porosity (a void area inside the secondary particle with respect to the cross sectional area of the secondary particle) of less than 15%, 10% or less, 5% or less, or 2% or less. The lower limit of the porosity is not particularly limited, and is, for example, 0.1% or more.

The porosity can be measured by observing an arbitrary section of the lithium-transition metal composite oxide 1 (secondary particle section having a sectional major diameter of the volume average particle size Mv $\pm$ 20%) using a scanning electron microscope and performing image analysis. For example, a plurality of particles of the lithium-transition metal composite oxide 1 are embedded in a resin or the like, and the resulting product is subjected to a cross sectional polishing process to enable observation of sections of the particles. Then, using image analysis software: WinRoof 6.1.1 or the like, voids (portions where primary particles are absent) in the secondary particles are measured as black portions, dense portions (portions where primary particles are present) in contours of the secondary particles are measured as white portions, the area of [black portions/(black portions + white portions)] is calculated for arbitrary 20 or more particles, and thus the porosity can be determined.

(Volume average particle size)

When measured with a laser diffraction/scattering particle size distribution analyzer, the volume average particle size Mv of the lithium-transition metal composite oxide 1 is preferably 1 $\mu$m or more and 10 $\mu$m or less, more preferably 2 $\mu$m or more and 7 $\mu$m or less, and still more preferably 3 $\mu$m or more and 5 $\mu$m or less. This is because when particles of the lithium-transition metal composite oxide have a volume average particle size of 1 $\mu$m or more and 10 $\mu$m or less, the battery capacity per volume can be sufficiently increased in a secondary battery including a positive electrode in which the positive electrode active material 10 containing the lithium-transition metal composite oxide 1 is used. The lower limit of the volume average particle size Mv may be 2 $\mu$m or more, or 3 $\mu$m or more. The volume average particle size Mv may be within a range between any of the above-described upper limits and any of the above-described lower limits, or within a range between any two of the above-described upper limits.

(2) Coating layer

The positive electrode active material 10 includes the coating layer 2 on the surface of the lithium-transition metal composite oxide 1. If the coating layer 2 is included on the surface of the lithium-transition metal composite oxide 1, in a secondary battery including a positive electrode containing the positive electrode active material 10, an interaction between the positive electrode active material 10 and a solid electrolyte can be suppressed.

The coating layer 2 contains a compound containing lithium and tungsten, and may be formed of, for example, a compound containing lithium, tungsten, and oxygen. Examples of the compound containing lithium and tungsten include $Li_2WO_4$, $7Li_2WO_4 \cdot 4H_2O$, and $Li_4WO_5$, and may include $Li_4WO_5$ having a rock salt structure (space group: Fm-3m). The type of the compound containing lithium and tungsten can be confirmed from a diffraction pattern by an X-ray diffraction method (XDR). Specifically, from a diffraction pattern obtained when the positive electrode active material 10 is subjected to powder X-ray diffraction (XRD) measurement, at least one of a peak attributed to $Li_2WO_4$ having an "R-3" structure, a peak attributed to $7Li_2WO_4 \cdot 4H_2O$ having a "P-43m" structure, or a peak attributed to $Li_4WO_5$ having an "Fm-3m" structure is preferably detected.

The coating layer 2 refers to a site (region) having a higher tungsten (W element) concentration than the lithium-transition metal composite oxide 1 (center region), which is a material to be coated, in a region on the surface side (surface layer) of the positive electrode active material 10. The coating layer 2 and the lithium-transition metal composite oxide 1 may or may not have a clear boundary. For example, the coating layer 2 and the lithium-transition metal composite oxide 1 may be partially solid-solved.

(Percentage of coverage with tungsten)

The percentage of coverage P with tungsten can be calculated with the following (Formula 1) from semiquantitative analysis by X-ray photoelectron spectroscopy (XPS). The percentage of coverage P with tungsten indicates the extent of the area coated with the coating layer 2 with respect to the surface of the secondary particle of the lithium-transition metal composite oxide (the percentage of coverage with the coating layer containing lithium and tungsten with respect to the surface of the secondary particle).

$$P = (W/(W + Ni + Co + M)) \times 100 \quad \cdots \quad (Formula\ 1)$$

In the above (Formula 1),

W represents the amount of tungsten quantified by XPS analysis,
Ni represents the amount of nickel quantified by XPS analysis,
Co represents the amount of cobalt quantified by XPS analysis, and
M represents the amount of the element M quantified by XPS analysis excluding tungsten.

In the XPS analysis, for example, the lithium-transition metal composite oxide 1 is measured by X-ray photoelectron spectroscopy (XPS) with an X-ray photoelectron spectrometer (Versa ProbeII manufactured by ULVAC-PHI, Inc.) using a monochromatic Al-K$\alpha$ ray as an X-ray source at an X-ray beam width of 100 $\mu$m and an output of 25 W, and at this time, the amount of each metal element is determined from the intensity (area) ratio of the peak derived from each metal element in the obtained XPS spectrum. XPS analysis can characteristically obtain information of a measurement target selectively in the range of 1 nm or more and 5 nm or less from the surface of the measurement target, and thus can determine the composition ratio of a surface layer (in the range of 1 to 5 nm from the surface) of a material.

The percentage of coverage P with tungsten is 30% or more, preferably 60% or more, and still more preferably 80% or more. If the percentage of coverage P with tungsten in the coating layer is set in the above range, it is possible to exhibit an effect of preventing both an interfacial reaction between the lithium-transition metal composite oxide and the solid electrolyte and mixing at the interface between the lithium-transition metal composite oxide and the coating layer while a high discharge capacity is obtained, and deterioration during a cycle can be suppressed.

The upper limit of the percentage of coverage P with tungsten is not particularly limited, and is to be 100% or less, and may be 100%, or 95% or less. When the manufacturing method described below is used, the positive electrode active material 10 having a high discharge capacity can be obtained even if the percentage of coverage with tungsten is 90% or less. When the percentage of coverage with tungsten is 30% or more and 95% or less, the positive electrode active material for an all-solid-state lithium ion secondary battery can have a high discharge capacity.

(Content of tungsten)

The content of tungsten in the positive electrode active material 10 is not particularly limited, and can be appropriately adjusted so as to satisfy the above-described percentage of coverage. The content of tungsten may be, for example, 0.1 mass% or more and 6 mass% or less, more than 1 mass% and 5 mass% or less, or 1.5 mass% or more and 4 mass% or less with respect to the total amount of the positive electrode active material 10. When the content of tungsten is in the above range, the coating layer can be uniformly formed over the entire surface of the lithium-transition metal composite oxide 1. Tungsten may be present in the form of a tungsten-containing compound between primary particles in the secondary particle. The lower limit of the tungsten content may be 2 mass% or more, or 2.5 mass% or more. The upper limit of tungsten content may be 3 mass% or less.

(Average thickness of coating layer)

The coating layer preferably has an average thickness of, for example, 2 nm or more and 20 nm or less, more preferably 2 nm or more and 15 nm or less, and still more preferably 5 nm or more and 15 nm or less. The average thickness of the coating layer may be 10 nm or more.

The average thickness of the coating layer 2 can be calculated by observing the coating layer 2 with a scanning electron microscope (SEM), a transmission electron microscope (TEM), or the like, or analyzing the coating layer 2 with a spectroscope such as an energy dispersive X-ray spectrometer (EDS) or an electron energy-loss spectrometer (EELS) attached to the above-described microscope, and measuring the layer formed uniformly on the surface of the lithium-transition metal composite oxide 1. When the thickness of the coating layer 2 depends on a measurement site, the thickness of the coating layer 2 refers to the average value of the thicknesses measured at a plurality of sites. The average thickness of the coating layer 2 can also be simply calculated from the specific surface area, the percentage of coverage, and the tungsten content of the lithium-transition metal composite oxide 1.

(3) Positive electrode active material

The positive electrode active material 10 includes the above-described lithium-transition metal composite oxide 1 and the coating layer 2, and preferably includes only particles of the lithium-transition metal composite oxide 1 and the coating layer 2. The positive electrode active material 10 preferably has the following characteristics.

(Moisture content)

Impurities may be mixed in the manufacturing process of the positive electrode active material 10. Examples of the impurities include moisture. Moisture is an impurity that may be increased in the positive electrode active material 10 by a treatment using water or an aqueous solution in a coating process. Moisture may cause hydrolysis and deterioration of the solid electrolyte and affect the initial discharge capacity, and therefore is preferably controlled within a predetermined range.

The positive electrode active material 10 preferably has a moisture content (content of moisture) of 0.08 mass% or less with respect to the total amount of the positive electrode active material 10. If the moisture content is 0.08 mass% or less, a hydrolysis reaction of the solid electrolyte can be more reliably suppressed in a solid secondary battery using the positive electrode active material 10. Hydrolysis of the solid electrolyte generates hydrogen sulfide to cause deterioration, resulting in reduction of lithium ion conductivity. However, if the moisture content of the positive electrode active material 10 is set to 0.08 mass% or less, a hydrolysis reaction of the solid electrolyte can be more reliably suppressed, and such deterioration can be suppressed.

The moisture content of the positive electrode active material 10 can be evaluated, for example, using the Karl Fischer method at a heating temperature of 300°C. The lower limit of the moisture content of the positive electrode active material 10 is not particularly limited, and is, for example, 0.001 mass% or more.

(Specific surface area)

The specific surface area of the positive electrode active material 10 is not particularly limited, and may be, for example, $0.3 \, m^2/g$ or more and $2.0 \, m^2/g$ or less, or $0.3 \, m^2/g$ or more and $1.0 \, m^2/g$ or less. When the specific surface area is in the above range, the output characteristic is favorable. The specific surface area can be measured using a nitrogen adsorption BET method. The specific surface area of the positive electrode active material 10 may be, for example, $0.8 \, m^2/g$ or less.

(Pore volume and average pore size)

The pore volume diameter of the positive electrode active material 10 is not particularly limited, and may be, for example, $0.001 \, cm^3/g$ or more and $0.008 \, cm^3/g$ or less, or $0.001 \, cm^3/g$ or more and $0.004 \, cm^3/g$ or less. When the pore volume is in the above range, the added tungsten can sufficiently permeate not only the surface but also the inside of the secondary particle, a uniform coating layer can be formed on the surface of the secondary particle, and a tungsten-containing compound can be formed inside the secondary particle. In an all-solid-state lithium ion secondary battery, a solid electrolyte does not enter the inside of a secondary particle of a positive electrode active material, and therefore lithium ions cannot diffuse through voids inside the secondary particle. When the pore volume is in the above range, it is considered that the ratio of voids is so small that the resistance of the battery is reduced.

The average pore size (diameter) of the positive electrode active material 10 may be, for example, 1 nm or more and 10 nm or less, or 1 nm or more and 4 nm or less. When the average pore size is in the above range, the added tungsten can efficiently permeate the surface and the inside of the secondary particle. The pore volume diameter and the average pore size can be measured using the Barrett-Joyner-Halenda (BJH) method.

2. Method of manufacturing positive electrode active material for all-solid-state lithium ion secondary battery

The method of manufacturing the positive electrode active material 10 is not particularly limited as long as a positive electrode active material having the above-described characteristics can be obtained, and for example, the positive electrode active material 10 can be manufactured with high productivity by using the following manufacturing method.

The method of manufacturing the positive electrode active material 10 includes, for example, a dispersion step (S10) of dispersing a lithium-transition metal composite oxide (base material) in pure water or an aqueous LiOH solution to obtain a positive electrode active material slurry, a separation step (S20) of dehydrating the positive electrode active material slurry to obtain a cleaned cake, a mixing step (S30) of mixing the cleaned cake and a tungsten-containing compound (powder) to obtain a mixture, and a drying step (S40) of drying the mixture.

[Dispersion step (S10)]

The dispersion step (S10) is a step of mixing a lithium-transition metal composite oxide (base material) with water or an aqueous solution to obtain a positive electrode active material slurry. In the dispersion step (S10), impurities (excessive lithium, sulfate radical, and the like) are removed that are present on the surfaces of the primary particles of the lithium-transition metal composite oxide (base material) and present at the grain boundaries between the primary particles, and the entire surface of the lithium-transition metal composite oxide (base material) is wetted with water or the aqueous solution. Thus, adhesion of the tungsten-containing compound added in the subsequent step to the surface and the inside of the secondary particle can be promoted, and a more uniform coating layer 2 can be formed.

The lithium-transition metal composite oxide used as the base material may be one obtained using a known technique. For example, the lithium-transition metal composite oxide (base material) can be obtained by mixing a lithium compound with a nickel composite hydroxide obtained by co-precipitating (crystallizing) metal elements (other than lithium) included in the lithium-transition metal composite oxide or a nickel composite oxide obtained by further heat-treating the nickel composite hydroxide (hereinafter, also collectively referred to as "precursor"), and then firing the obtained lithium mixture.

The lithium-transition metal composite oxide (base material before being coated) to be used may have the same composition as the lithium-transition metal composite oxide 1 contained in the positive electrode active material 10. In the lithium-transition metal composite oxide (base material), the BET specific surface area after the dispersion step (S10) (and before being coated) may be larger than the BET specific surface area before the dispersion step (S10), and may be, for example, 1.0 $m^2/g$ or more and 2.0 $m^2/g$ or less. In the lithium-transition metal composite oxide (base material), the pore volume after the dispersion step (S10) (and before being coated) may be larger than the pore volume before the dispersion step (S10), and for example, the pore volume after the dispersion step (S10) may be 0.005 $cm^3/g$ or more and 0.01 $cm^3/g$ or less. The average pore size after the dispersion step (S10) may be 1 nm or more and 10 nm or less.

The dispersion step may be performed using a known method under known conditions as long as deterioration of a battery characteristic is not caused by excessive elution of lithium from the surface of the lithium-transition metal composite oxide (base material). For example, the slurry concentration of the positive electrode active material can be appropriately adjusted within a range of 500 g/L or more and 2500 g/L or less.

Although the water or the aqueous solution used in the dispersion step (S10) is not particularly limited, an aqueous solution containing Li is preferably used, and an aqueous lithium hydroxide solution is preferably used. Using the aqueous lithium hydroxide solution enables supply of a sufficient amount of lithium to the surface of the secondary particle of the lithium-transition metal composite oxide (base material) and the inside of the secondary particle (voids between primary particles and incomplete grain boundaries) communicating with the outer surface of the secondary particle, and thus a reaction with a tungsten compound can be promoted in the drying step (S40), and other impurities can be efficiently removed. The concentration of the aqueous lithium hydroxide solution can be appropriately adjusted within a range of, for example, 0.5 g/L or more and 35 g/L or less in terms of lithium weight.

[Solid-liquid separation step (S20) ]

The solid-liquid separation step (S20) is a step of dehydrating the positive electrode active material slurry to obtain a cleaned cake. This is a step of subjecting the slurry to solid-liquid separation to obtain a cleaned cake containing the lithium-nickel composite oxide. The method of dehydrating the positive electrode active material slurry is not particularly limited, and for example, the positive electrode active material slurry is dehydrated by solid-liquid separation using a suction filter, a centrifuge, a filter press, or the like.

The moisture content of the cleaned cake may be, for example, in a range of 2 mass% or more and 15 mass% or less.

[Mixing step (S30) ]

The mixing step (S30) is a step of mixing the cleaned cake and a powder of a tungsten compound to obtain a mixture. In the mixing step (S30), the tungsten compound permeates the surface of the lithium-transition metal composite oxide (base material) and the inside of the base material permeable to water or an aqueous solution, and thus in the lithium-transition metal composite oxide 1, tungsten can be uniformly dispersed on the surface of the secondary particle and the inside of the secondary particle (voids between primary particles and the interface).

[Drying step (S40) ]

The drying step (S40) is a step of drying the mixture obtained in the mixing step (S30). In the drying step (S40), a compound containing tungsten and lithium is formed from W supplied from the tungsten compound and Li supplied from the aqueous solution of the slurry of the positive electrode active material or Li eluted from the lithium transition metal composite oxide (base material), and thus the positive electrode active material 10 can be obtained in which the coating layer 2 is uniformly formed on the surface of the secondary particle of the lithium-transition metal composite oxide 1. The obtained positive electrode active material 10 may have a smaller specific surface area and/or a smaller pore volume than the lithium-transition metal composite oxide (base material) after the dispersion step (S10) and before the mixing step (S30).

The drying conditions are to be such that the moisture content in the mixture can be sufficiently reduced, and for example, the drying temperature may be 80°C or more and 110°C or less. After the drying step (S40), a heat treatment step may be performed at a higher temperature than in the drying step.

3. All-solid-state lithium ion secondary battery

The all-solid-state lithium ion secondary battery (hereinafter, also referred to as "all-solid-state battery") according to the present embodiment includes a positive electrode, a negative electrode, and a solid electrolyte, and the positive electrode contains the positive electrode active material 10. The positive electrode may contain a positive electrode active material other than the positive electrode active material 10. For example, the positive electrode may contain single primary particles, or may be a mixture of single primary particles and a secondary particle. The positive electrode may contain a positive electrode active material having a composition and a particle size different from those of the positive electrode active material 10. Hereinafter, each component of the all-solid-state battery according to the present embodiment will be described.

The embodiments described below are merely examples, and the all-solid-state battery can be implemented in various modified and improved forms based on knowledge of those skilled in the art including the following embodiments. Use of the all-solid-state battery is not particularly limited.

(Positive electrode)

The positive electrode can be formed by molding a positive electrode mixture. The positive electrode is appropriately treated according to a battery to be used. For example, in order to increase the electrode density, a pressure compression treatment by pressing or the like can be performed.

The above-described positive electrode mixture can be formed by mixing the above-described positive electrode active material in a powder state and a solid electrolyte.

The solid electrolyte is added in order to impart appropriate ionic conductivity to the electrode.

A material of the solid electrolyte is not particularly limited, and examples of a usable material include sulfide solid electrolytes such as $Li_3PS_4$, $Li_7P_3S_{11}$, and $Li_{10}GeP_2S_{12}$, oxide-based solid electrolytes such as $Li_7La_3Zr_2O_{12}$ and $Li_{0.34}La_{0.51}TiO_{2.94}$, and polymer-based electrolytes such as PEO.

Note that a binding agent or a conductive auxiliary agent can also be added to the positive electrode mixture.

The binding agent serves to bind the positive electrode active material. The binding agent used in the positive electrode mixture is not particularly limited.
For example, one or more selected from the group consisting of polyvinylidene fluoride (PVDF), polytetrafluoroethylene (PTFE), fluororubber, ethylene propylene diene rubber, styrene butadiene, cellulose-based resins, polyacrylic acid, and the like can be used.

A conductive material is added to impart appropriate conductivity to the electrode. A material of the conductive material is not particularly limited, and examples of a usable material include graphite such as natural graphite, artificial graphite, and expanded graphite, and carbon black-based materials such as acetylene black and Ketjenblack (registered trademark).

The mixing ratio of each substance in the positive electrode mixture is not particularly limited. For example, in the positive electrode mixture, the content of the positive electrode active material can be 50 parts by mass or more and 90 parts by mass or less, and the content of the solid electrolyte can be 10 parts by mass or more and 50 parts by mass or less.

A method of producing the positive electrode is not limited to the above-described example, and another method may be adopted.

(Negative electrode)

The negative electrode can be formed by molding a metal (lithium metal, indium metal, lithium indium alloy, lithium aluminum alloy, Si or alloy containing Si, or the like) or a negative electrode mixture. Although the components included in the negative electrode mixture, the proportions thereof, and the like are different from those in the positive electrode, the negative electrode is formed using substantially the same method as the method of forming the positive electrode, and various treatments are performed as necessary in the same manner as for the positive electrode. The negative electrode mixture can be prepared by mixing a negative electrode active material and a solid electrolyte. As the negative electrode active material, for example, an occluding material capable of occluding and releasing lithium ions can be adopted. The occluding material is not particularly limited. For example, one or more selected from the group consisting of natural graphite, artificial graphite, fired products of an organic compound such as a phenol resin, powders of a carbon substance such as coke, and the like can be used. When such an occluding material is adopted as the negative electrode active material, a sulfide electrolyte such as $Li_3PS_4$ can be used as the solid electrolyte as in the positive electrode.

(Solid electrolyte)

The solid electrolyte is a solid having $Li^+$ ionic conductivity. As the solid electrolyte, one selected from the group consisting of oxides, sulfides, polymers, and the like can be used singly, or two or more selected from the above group can be used in combination.

The oxide-based solid electrolyte is not particularly limited, and any oxide-based solid electrolyte can be used as long as it contains oxygen (O) and has lithium ion conductivity and an electronic insulation property.

Examples of the oxide-based solid electrolyte include lithium phosphate ($Li_3PO_4$), $Li_3PO_4NX$, $LiBO_2NX$, $LiNbO_3$, $LiTaO_3$, $Li_2SiO_3$, $Li_4SiO_4$-$Li_3PO_4$, $Li_4SiO_4$-$Li_3VO_4$, $Li_2O$-$B_2O_3$-$P_2O_5$, $Li_2O$-$SiO_2$, $Li_2O$-$B_2O_3$-$ZnO$, $Li_{1+x}Al_xTi_{2-x}(PO_4)_3$ ($0 \leq X \leq 1$), $Li_{1+x}Al_xGe_{2-x}(PO_4)_3$ ($0 \leq X \leq 1$), $LiTi_2(PO_4)_3$, $Li_{3x}La_{2/3-x}TiO_3$ ($0 \leq X \leq 2/3$), $Li_5La_3Ta_2O_{12}$, $Li_7La_3Zr_2O_{12}$, $Li_6BaLa_2Ta_2O_{12}$, and $Li_{3.6}Si_{0.6}P_{0.4}O_4$.

The sulfide solid electrolyte is not particularly limited, and any sulfide solid electrolyte can be used as long as it contains sulfur (S) and has lithium ion conductivity and an electronic insulation property. Examples of the sulfide solid electrolyte include $Li_2S$-$P_2S_5$, $Li_2S$-$SiS_2$, $LiI$-$Li_2S$-$SiS_2$, $LiI$-$Li_2S$-$P_2S_5$, $LiI$-$Li_2S$-$B_2S_3$, $Li_3PO_4$-$Li_2S$-$Si_2S$, $Li_3PO_4$-$Li_2S$-$SiS_2$, $LiPO_4$-$Li_2S$-$SiS$, $LiI$-$Li_2S$-$P_2O_5$, and $LiI$-$Li_3PO_4$-$P_2S_5$.

As the inorganic solid electrolyte, one other than the above-described inorganic solid electrolytes may be used, and for example, $Li_3N$, $LiI$, $Li_3N$-$LiI$-$LiOH$, or the like may be used.

The polymer-based solid electrolyte is not particularly limited as long as it is a polymer compound that exhibits ionic conductivity, and examples of a usable polymer-based solid electrolyte include polyethylene oxide, polypropylene oxide, and copolymers thereof. The organic solid electrolyte may contain a supporting salt (lithium salt). When a solid electrolyte is used, the solid electrolyte may also be mixed in the positive electrode material in order to ensure contact between the electrolyte and the positive electrode active material.

(Shape and configuration of all-solid-state battery)

Next, examples of arrangement and configurations of members of the all-solid-state battery according to the present embodiment will be described.

The all-solid-state battery including the positive electrode, the negative electrode, and the solid electrolyte described above can be formed into various shapes, such as a coin shape and a stacked shape, to which a determined pressure can be applied. In any shape, the positive electrode and the negative electrode can be stacked with the solid electrolyte interposed therebetween. Then, a positive electrode collector and a positive electrode terminal connected to the outside are connected to each other using a current collecting lead or the like, and a negative electrode collector and a negative electrode terminal connected to the outside are connected to each other using a current collecting lead or the like. The resulting product is sealed in a battery case, and thus an all-solid-state battery can be obtained.

(Characteristics of all-solid-state battery)

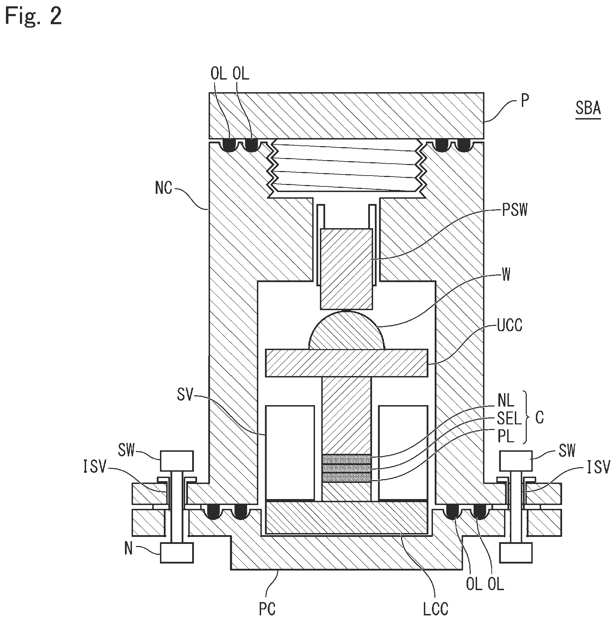

The all-solid-state battery according to the present embodiment using the positive electrode active material 10 can have a charge and discharge capacity equivalent to the charge and discharge capacity exhibited by a lithium ion secondary battery using an electrolyte solution. For example, when a test battery shown in Fig. 2 is formed using the positive electrode active material 10 of the present embodiment in a positive electrode, the initial discharge capacity measured under the conditions in Examples may be 110% or more, 130% or more, 150% or more, or 170% or more with respect to the initial discharge capacity of a lithium-transition metal composite oxide manufactured under the same conditions except that a coating layer is not formed.

Use of the secondary battery of the present embodiment is not particularly limited, and the secondary battery can be suitably used for uses in which various power sources are required. The secondary battery of the present embodiment has a charge and discharge capacity equivalent to the charge and discharge capacity exhibited by a lithium ion battery using an electrolyte solution and can be downsized, and therefore the secondary battery can also be suitably used as a power source for an electric car having a restricted mounting space.

Examples

Hereinafter, the present invention will be specifically described with reference to Examples and Comparative Examples.

[Example 1]

1. Lithium-transition metal composite oxide

A lithium-transition metal composite oxide having the following physical properties was prepared using a known method.

(a) Chemical composition

The chemical composition of the lithium-transition metal composite oxide determined by quantitative analysis using an ICP optical emission spectrometer (725ES manufactured by Varian Inc.) was such that the amount ratio of Li, Ni, Co, and Al was Li : Ni : Co : Al = 1.03 : 0.80 : 0.15 : 0.05.

(b) Crystal structure

The crystal structure of the lithium-transition metal composite oxide was measured using XRD (X'Pert PRO MRD manufactured by PANalytical), and determined to be a layered rock salt structure belonging to the R-3m structure.

(c) Specific surface area

The BET specific surface area of the lithium-transition metal composite oxide was measured using a fully automatic BET specific surface area measuring apparatus (Macsorb manufactured by Mountech Co., Ltd.), and as a result, was determined to be 0.60 $m^2$/g.

(d) Volume average particle size

The volume average particle size of the lithium-transition metal composite oxide was measured using a laser diffraction/scattering particle size distribution measuring apparatus (MICROTRAC HRA manufactured by NIKKISO CO., LTD.), and as a result, was determined to be 5.1 $\mu$m.

2. Formation of coating layer

A powder of a lithium-transition metal composite oxide of $Li_{1.03}Ni_{0.80}Co_{0.15}Al_{0.05}O_2$ was subjected to the following coating process to manufacture a positive electrode active material.

The lithium-transition metal composite oxide was dispersed in an aqueous LiOH solution to form a positive electrode active material slurry, and then the positive electrode active material slurry was dehydrated to obtain a positive electrode active material cake (moisture content: 5.8 mass%). The positive electrode active material cake was mixed with $WO_3$, and then the mixture was vacuum-dried and sieved to obtain a positive electrode active material. The obtained positive electrode active material was evaluated using the following method.

3. Evaluation of positive electrode active material

(a) Composition

The composition was analyzed using an ICP emission spectrometer (725ES manufactured by Varian Inc.). This analysis showed that the positive electrode active material contained W in an amount of 1.7 wt%. The moisture content of the positive electrode active material was measured using the Karl Fischer method at a heating temperature of 300°C, and the moisture content was determined to be 0.08 mass%.

(b) Evaluation of percentage of coverage (surface analysis)

The positive electrode active material was measured by XPS (Versa ProbeII manufactured by ULVAC-PHI, Inc.), and semiquantitative values were calculated from each peak area of Ni = 2p3/2 spectrum, Co = 2p3/2 spectrum, Al = 2p spectrum, W = 4f7/2 spectrum, and Nb = 3d5/2 spectrum obtained by XPS, and the substance amount (at%) on the surface of the positive electrode active material was obtained from the semiquantitative values. The percentage of coverage with W, which is the ratio of the amount of W present on the surface to the sum of the amounts of Ni, Co, Al, and W, was (W) / (Ni + Co + Al + W) x 100 = 33%. The percentage of coverage with Nb, which is the ratio of the amount of Nb present on the surface to the sum of the amounts of Ni, Co, Al, and Nb, was (Nb)/(Ni + Co + Al + Nb) x 100 = 0%.

The crystal structure of the positive electrode active material was measured using XRD (D8 DISCOVER Vario-1 manufactured by Bruker Japan K.K.), and as a result, a peak attributed to the lithium-transition metal composite oxide (R-3m) and peaks attributed to $Li_2WO_4$, $7Li_2WO_4 \cdot 4H_2O$, and $Li_4WO_5$ were detected.

(c) Thickness of coating layer

The thickness of the coating layer was calculated from the amount of W contained in the positive electrode active material, the percentage of coverage with W, and the BET specific surface area of the positive electrode active material. The BET specific surface area was measured using a fully automatic BET specific surface area measuring apparatus (Macsorb manufactured by Mountech Co., Ltd.).

(d) Pore volume and average pore size

The pore volume and the average pore size (diameter) were calculated using the Barrett-Joyner-Halenda (BJH) method from the nitrogen adsorption isotherm measured using a specific surface area/pore distribution measuring apparatus with four independent stations (QUADRASORB SI manufactured by Quantachrome Instruments). In the BJH method, the pore shape is assumed to be cylindrical (cylinder shape), and the pore size distribution is obtained by a relational expression between the pore size at which capillary condensation occurs and the relative pressure of nitrogen (Kelvin's equation).

4. Production of all-solid-state battery (test battery)

For battery evaluation of the positive electrode active material, a battery having a structure illustrated in Fig. 2 (hereinafter, referred to as "test battery") was used. As shown in Fig. 2, a test battery SBA includes a case including a negative electrode can NC and a positive electrode can PC, and a green compact cell C housed in the case.

The case includes the negative electrode can NC that is hollow and open at one end, and the positive electrode can PC disposed on the opening of the negative electrode can NC. The configuration is such that the positive electrode can PC is disposed on the opening of the negative electrode can NC to form a space that houses the green compact cell C between the positive electrode can and the negative electrode can NC. The positive electrode can PC is fixed to the negative electrode can NC with a thumbscrew SW and a nut N.

The negative electrode can NC includes a negative electrode terminal, and the positive electrode can PC includes a positive electrode terminal. The case includes an insulating sleeve ISV, and the insulating sleeve ISV fixes the negative electrode can NC and the positive electrode can PC so as to maintain the non-contact state therebetween.

The negative electrode can NC has one closed end provided with a pressure screw PSW, and after the positive electrode can PC is fixed to the negative electrode can NC, the pressure screw PSW is tightened toward the space housing the green compact cell C to hold the green compact cell C in a pressurized state through a hemispherical washer W. In the negative electrode can NC, the one end where the pressure screw PSW is present is provided with a screw-type plug P. O-rings OL are provided between the negative electrode can NC and the positive electrode can PC, and between the negative electrode can NC and the plug P. The O-rings seal a gap between the negative electrode can NC and the positive electrode can PC, and maintain airtightness in the case.

The green compact cell C is a pellet including a positive electrode layer PL, a solid electrolyte layer SEL, and a negative electrode layer NL stacked in this order. The positive electrode layer PL is in contact with the inner surface of the positive electrode can PC via a lower current collector LCC, and the negative electrode layer NL is in contact with the inner surface of the negative electrode can NC via an upper current collector UCC, the hemispherical washer W, and the pressure screw PSW. The lower current collector LCC, the green compact cell C, and the upper current collector UCC are protected by a sleeve SV so that the positive electrode layer PL and the negative electrode layer NL are not in electrical contact with each other.

The test battery SBA was produced as follows.

First, 60 mg of the positive electrode active material and 40 mg of a solid electrolyte $Li_3PS_4$ were mixed in a mortar to produce a positive electrode mixture. Next, a mold was prepared for producing a pellet having a diameter of 10 mm, and (1) 60 mg of the solid electrolyte was put into the mold and molded under a pressure of 10 MPa, and then (2) 15 mg of the positive electrode mixture was further put into the mold and pressurized at 360 MPa to obtain a two-layer pellet including the positive electrode layer PL and the solid electrolyte layer that were firmly in close contact with each other.

The lower current collector LCC, the pellet disposed so that the positive electrode layer PL was downward, an indium foil (negative electrode layer NL), and the upper current collector UCC were stacked in this order from the bottom to form an electrode (green compact cell C), the electrode (green compact cell C) was sealed in the case, and then the pressure screw PSW was tightened with a torque of 5 to 7 N·m to apply a restraining force. The test battery was produced in a glove box in an Ar atmosphere with a dew point controlled at -80°C.

5. Evaluation of solid secondary battery

The charge and discharge capacity of the test battery was measured under the following conditions.

The test battery SBA was placed in a thermostatic bath at 25°C, and after the open circuit voltage OCV was stabilized, the test battery was charged to a cutoff voltage of 4.3 V (vs. Li+/Li) so that the current value with 1 g of the active material became 19 mA/g, and then continuously charged at 4.3 V (vs. Li+/Li) until the current value with 1 g of the active material became 1.9 mA/g. After 1 hour of pause, the test battery was discharged to a cutoff voltage of 3.0 V (vs. Li+/Li) so that the current value with 1 g of the active material became 19 mA/g, and then continuously charged at 3.0 V (vs. Li+/Li) until the current with 1 g of the active material became 1.9 mA/g.

Table 1 shows the evaluation results. The discharge capacity shown in Table 1 is the ratio to the discharge capacity in Comparative Example 1 as a reference (100%). A discharge capacity ratio more than 100% indicates that the discharge capacity is larger than that in Comparative Example 1 in which the test battery is an uncoated product. The discharge capacity ratio in Example 1 was 111%. Furthermore, a section of the positive electrode active material of Example 1 was analyzed, and as a result, a compound containing tungsten was confirmed between primary particles inside a secondary particle. The porosity of the positive electrode active material of Example 1 was 5% or less.

[Example 2]

A positive electrode active material was produced and evaluated under the same conditions as in Example 1 except that the amount of $WO_3$ added was changed. As a result, the percentage of coverage with W was 61%, the percentage of coverage with Nb was 0%, and the discharge capacity ratio to the discharge capacity in Comparative Example 1 was 139%. Table 1 shows the results.

[Example 3]

A positive electrode active material was produced and evaluated under the same conditions as in Example 1 except that the amount of $WO_3$ added was changed. As a result, the percentage of coverage with W was 89%, the percentage of coverage with Nb was 0%, and the discharge capacity ratio to the discharge capacity in Comparative Example 1 was 174%. Table 1 shows the results.

[Example 4]

A positive electrode active material was produced and evaluated under the same conditions as in Example 1 except that the amount of $WO_3$ added was changed. As a result, the percentage of coverage with W was 91%, the percentage of coverage with Nb was 0%, and the discharge capacity ratio to the discharge capacity in Comparative Example 1 was 151%. Table 1 shows the results.

[Comparative Example 1]

A positive electrode active material was produced and evaluated under the same conditions as in Example 1 except that the step of forming a coating layer was omitted. As a result, the percentage of coverage with W was 0%, and the percentage of coverage with Nb was 0%. The discharge capacity in Comparative Example 1 was set to 100% as a reference of the discharge capacity ratio. Table 1 shows the results.

[Comparative Example 2]

A positive electrode active material was produced in the same manner as in Example 1 except that the amount of $WO_3$ added was changed. As a result, the percentage of coverage with W was 13%, the percentage of coverage with Nb was 0%, and the discharge capacity ratio to the discharge capacity in Comparative Example 1 was 74%. Table 1 shows the results.

[Comparative Example 3]

A positive electrode active material was produced and evaluated under the same conditions as in Example 1 except that the step of forming a coating layer (containing tungsten) was changed to the following step to form a coating layer (containing niobium). As a result, the percentage of coverage with W was 0%, the percentage of coverage with Nb was 83%, and the discharge capacity ratio to the discharge capacity in Comparative Example 1 was 124%. Table 1 shows the results.

(Coating process with niobium)

A powder of a lithium-transition metal composite oxide was weighed out in an amount of 500 g and made to flow in a tumbling fluidized bed granulating-coating machine (MP-01 manufactured by Powrex Corporation), a mixed aqueous solution prepared to have a Li/Nb ratio of 1.0 was sprayed into the fluidizing tank, the temperature of air supplied into the fluidizing tank was controlled to 120°C, and a coating treatment was slowly performed over 4 hours to form a coating layer on the surface of the powder. The obtained powder was collected and then heat-treated at 300°C for 2 hours in an oxygen atmosphere to produce a lithium-transition metal composite oxide having a coating layer including Li and Nb from which moisture was completely removed.

[Comparative Example 4]

A positive electrode active material was produced and evaluated under the same conditions as in Example 1 except that in the step of forming a coating layer, drying was performed without mixing $WO_3$. As a result, the percentage of coverage with W was 0%, the percentage of coverage with Nb was 0%, and the discharge capacity ratio to the discharge capacity in Comparative Example 1 was 16%. Table 1 shows the results.

[Table 1]

| | Lithium-transition metal composite oxide | | Coating layer | | | | | BET specific surface area | Pore volume | Average pore diameter | Discharge capacity ratio |
|---|---|---|---|---|---|---|---|---|---|---|---|
| | Composition | Mv | Amount of W | Percentage of coverage with W | Amount of Nb | Percentage of coverage with Nb | Thickness* | | | | |
| | | [μm] | [wt%] | [%] | [wt%] | [%] | [nm] | [m²/g] | [cm³/g] | [nm] | [%] |
| Example 1 | $Li_{1.03}Ni_{0.80}Co_{0.15}Al_{0.05}O_2$ | 5 | 1.7 | 33 | - | - | 20 | 0.69 | 0.004 | 3.4 | 111 |
| Example 2 | $Li_{1.03}Ni_{0.80}Co_{0.15}Al_{0.05}O_2$ | 5 | 2.3 | 61 | - | - | 16 | 0.64 | 0.004 | 3.4 | 139 |
| Example 3 | $Li_{1.03}Ni_{0.80}Co_{0.15}Al_{0.05}O_2$ | 5 | 2.8 | 89 | - | - | 13 | 0.66 | - | - | 174 |
| Example 4 | $Li_{1.03}Ni_{0.80}Co_{0.15}Al_{0.05}O_2$ | 5 | 2.8 | 91 | - | - | 12 | 0.70 | - | - | 151 |
| Comparative Example 1 | $Li_{1.03}Ni_{0.80}Co_{0.15}Al_{0.05}O_2$ | 5 | 0 | - | - | - | - | 0.60 | 0.003 | 3.4 | 100 |
| Comparative Example 2 | $Li_{1.03}Ni_{0.80}Co_{0.15}Al_{0.05}O_2$ | 5 | 1.5 | 13 | - | - | 34 | 0.92 | 0.004 | 3.2 | 74 |
| Comparative Example 3 | $Li_{1.03}Ni_{0.80}Co_{0.15}Al_{0.05}O_2$ | 5 | 0 | - | 1.5 | 83 | 10 | 0.60 | - | - | 124 |
| Comparative Example 4 | $Li_{1.03}Ni_{0.80}Co_{0.15}Al_{0.05}O_2$ | 5 | 0 | - | - | - | - | 1.30 | 0.008 | 3.2 | 16 |

*The thickness of the coating layer was calculated from the specific surface area and the percentage of coverage.

[Evaluation results]

In the positive electrode active materials of Examples, the initial discharge capacity was remarkably improved as compared with the positive electrode active materials of Comparative Examples 1 and 4 in which a coating layer was not formed and Comparative Example 2 in which the percentage of coverage with W was low.

Furthermore, it has been shown that the positive electrode active materials of Examples 2 to 4 (percentage of coverage with W: 61 to 91%) have a higher initial discharge capacity than the positive electrode active material of Comparative Example 3 coated with a compound containing lithium and niobium (percentage of coverage with Nb: 83%).

Furthermore, it has been shown that in Comparative Example 4 in which a tungsten compound was not mixed with the positive electrode active material slurry in the step of forming a coating layer, the initial discharge capacity is significantly reduced as compared with Comparative Example 1 in which a step of forming a coating layer was not performed.

According to the present invention, it is possible to provide a positive electrode active material that can be suitably used in a positive electrode of an all-solid-state lithium ion secondary battery requiring a high battery capacity.

Note that, the technical scope of the present invention is not limited to the aspects described in the above embodiments and the like. One or more of the requirements described in the above embodiments and the like may be omitted. Furthermore, the requirements described in the above embodiments and the like can be combined as appropriate. To the extent permitted by law, the disclosure of Japanese Patent Application No. 2023-132647, which is a Japanese patent application, and all the literatures cited in the above embodiments and the like are incorporated as part of the description of this text.

Reference Signs List

| | |
|---|---|
| 1 | Lithium-transition metal composite oxide |
| 2 | Coating layer |
| 10 | Positive electrode active material |
| SBA | Test battery |
| PC | Positive electrode can |
| NC | Negative electrode can |
| ISV | Insulating sleeve |
| C | Green compact cell |
| PL | Positive electrode layer |
| NL | Negative electrode layer |
| SEL | Solid electrolyte layer |
| LCC | Lower current collector |
| UCC | Upper current collector |
| P | Plug |
| PSW | Pressure screw |
| W | Hemispherical washer |
| OL | O-ring |
| SV | Sleeve |
| SW | Screw |
| N | Nut |

**Claims**

1. A positive electrode active material for an all-solid-state lithium ion secondary battery, comprising:

a lithium-transition metal composite oxide including a secondary particle including a plurality of primary particles being aggregated; and
a coating layer coating a surface of the secondary particle,
the lithium-transition metal composite oxide containing lithium and nickel, the lithium-transition metal composite oxide optionally containing cobalt and an element M being an additive element other than lithium, nickel, cobalt, and oxygen,
the coating layer containing a compound containing at least lithium and tungsten, wherein
the surface of the secondary particle is coated with tungsten at a percentage of coverage of 30% or more and 95% or less, the percentage of coverage being represented by P (%) and calculated with (Formula 1) described below:

$$P = (W/(W + Ni + Co + M)) \times 100 \; (\%) \; ... \; (Formula \; 1)$$

wherein

W represents an amount of tungsten quantified by X-ray photoelectron spectroscopy (XPS analysis),
Ni represents an amount of nickel quantified by X-ray photoelectron spectroscopy (XPS analysis),
Co represents an amount of cobalt quantified by X-ray photoelectron spectroscopy (XPS analysis), and
M represents an amount of the element M quantified by X-ray photoelectron spectroscopy (XPS analysis) excluding tungsten.

2. The positive electrode active material for an all-solid-state lithium ion secondary battery according to claim 1, wherein the lithium-transition metal composite oxide is represented by (Formula 2) described below:

$$Li_aNi_{1-x-y}Co_xM_yO_{2+z} \; ... \qquad (Formula \; 2)$$

wherein
M represents one or more elements selected from the group consisting of Mg, Ca, Sr, Ba, Al, Ti, V, Cr, Mn, Fe, Cu, Zr, Nb, Mo, W, Ta, Si, P, and B, and $0.9 \leq a \leq 1.2$, $0.01 \leq x \leq 0.5$, $0.01 \leq y \leq 0.5$, $0.02 \leq x + y < 1.0$, and $-0.1 \leq z \leq 0.1$ are satisfied.

3. The positive electrode active material for an all-solid-state lithium ion secondary battery according to claim 1 or 2, wherein the lithium-transition metal composite oxide includes a compound containing tungsten present between the plurality of primary particles in the secondary particle.

4. The positive electrode active material for an all-solid-state lithium ion secondary battery according to claim 1 or 2, wherein the percentage of coverage being represented by P is 60% or more and 95% or less.

5. The positive electrode active material for an all-solid-state lithium ion secondary battery according to claim 1 or 2, wherein the percentage of coverage being represented by P is 80% or more and 95% or less.

6. The positive electrode active material for an all-solid-state lithium ion secondary battery according to claim 1 or 2, wherein the lithium-transition metal composite oxide has a volume average particle size Mv of 1 $\mu$m or more and 10 $\mu$m or less.

7. The positive electrode active material for an all-solid-state lithium ion secondary battery according to claim 1 or 2, containing tungsten at a content of 0.1 mass% or more and 6 mass% or less with respect to a total amount of the positive electrode active material.

8. The positive electrode active material for an all-solid-state lithium ion secondary battery according to claim 1 or 2, having a pore volume of 0.001 cm$^3$/g or more and 0.008 cm$^3$/g or less and an average pore size of 1 nm or more and 10 nm or less.

9. An all-solid-state lithium ion secondary battery comprising:

a positive electrode containing the positive electrode active material for an all-solid-state lithium ion secondary battery according to claim 1 or 2;
a negative electrode; and
a solid electrolyte.

Fig. 1

Fig. 2

# INTERNATIONAL SEARCH REPORT

| International application No. |
|---|
| **PCT/JP2024/028896** |

## A. CLASSIFICATION OF SUBJECT MATTER

***H01M 4/525***(2010.01)i; ***C01G 53/00***(2006.01)i; ***H01M 4/36***(2006.01)i; ***H01M 10/052***(2010.01)i; ***H01M 10/0562***(2010.01)i; ***H01M 10/0565***(2010.01)i

FI:   H01M4/525; H01M4/36 C; H01M10/052; H01M10/0562; H01M10/0565; C01G53/00 A

According to International Patent Classification (IPC) or to both national classification and IPC

## B. FIELDS SEARCHED

Minimum documentation searched (classification system followed by classification symbols)

H01M4/525; C01G53/00; H01M4/36; H01M10/052; H01M10/0562; H01M10/0565

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2023-80310 A (SUMITOMO METAL MINING CO., LTD.) 08 June 2023 (2023-06-08) claims 1, 3, paragraphs [0013]-[0015], [0045], [0087], [0101]-[0106], examples | 1-5, 7, 9 |
| Y | | 6 |
| Y | JP 7235130 B2 (SUMITOMO METAL MINING CO., LTD.) 08 March 2023 (2023-03-08) paragraphs [0056]-[0058] | 6 |
| A | WO 2023/090452 A1 (SUMITOMO CHEMICAL COMPANY, LIMITED) 25 May 2023 (2023-05-25) entire text | 1-9 |
| A | JP 2020-123440 A (SUMITOMO METAL MINING CO., LTD.) 13 August 2020 (2020-08-13) entire text | 1-9 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/028896**

| Patent document cited in search report | | | Publication date (day/month/year) | Patent family member(s) | Publication date (day/month/year) |
|---|---|---|---|---|---|
| JP | 2023-80310 | A | 08 June 2023 | (Family: none) | |
| JP | 7235130 | B2 | 08 March 2023 | US 2022/0344656 A1 paragraphs [0069]-[0072] WO 2021/054467 A1 EP 4033565 A1 CN 114424369 A | |
| WO | 2023/090452 | A1 | 25 May 2023 | (Family: none) | |
| JP | 2020-123440 | A | 13 August 2020 | (Family: none) | |

Form PCT/ISA/210 (patent family annex) (July 2022)

**EP 4 765 246 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014056661 A
- WO 2007004590 A
- JP 2023132647 A

**Non-patent literature cited in the description**

- **NARUMI OHTA et al.** LiNbO3-coated LiCoO2 as cathode material for all solid-state lithium secondary batteries. *Electrochemistry Communications*, 2007, vol. 9, 1486-1490